Europäisches Patentamt

European Patent Office

Office européen des brevets

(11) Numéro de publication : **0 322 267 B1**

## (12) FASCICULE DE BREVET EUROPEEN

(45) Date de publication du fascicule du brevet :
**11.03.92 Bulletin 92/11**

(51) Int. Cl.$^5$ : **F16B 37/04**

(21) Numéro de dépôt : **88403004.0**

(22) Date de dépôt : **29.11.88**

(54) **Dispositif de montage d'un écrou sur la face interne d'une pièce.**

(30) Priorité : **22.12.87 FR 8717910**

(43) Date de publication de la demande :
**28.06.89 Bulletin 89/26**

(45) Mention de la délivrance du brevet :
**11.03.92 Bulletin 92/11**

(84) Etats contractants désignés :
**DE GB IT**

(56) Documents cités :
**DE-A- 2 217 490
FR-A- 1 390 789
FR-A- 2 472 686
US-A- 2 779 377
US-A- 3 164 191
US-A- 3 192 823**

(73) Titulaire : **AUTOMOBILES PEUGEOT
75, avenue de la Grande Armée
F-75116 Paris (FR)**
Titulaire : **AUTOMOBILES CITROEN
62 Boulevard Victor-Hugo
F-92200 Neuilly-sur-Seine (FR)**

(72) Inventeur : **Coquillat, Gérard
48, Boulevard Franklin Roosevelt
92500 Reuil Malmaison (FR)**

(74) Mandataire : **Kohn, Philippe et al
c/o CABINET LAVOIX 2, place d'Estienne
d'Orves
F-75441 Paris Cédex 09 (FR)**

EP 0 322 267 B1

Jouve, 18, rue Saint-Denis, 75001 PARIS

**Description**

La présente invention a pour objet un dispositif de montage sur la face interne d'une pièce d'un écrou destiné à recevoir une vis d'assemblage introduite axialement depuis la face externe de la pièce.

On connaît déjà dans l'état de la technique un certain nombre de dispositifs de fixation et de montage d'un écrou, notamment à l'intérieur d'un corps creux.

Une première solution consiste à monter l'écrou prisonnier dans une cage rapportée et fixée à demeure, par exemple par soudage sur la face interne de la pièce.

Un tel type de montage nécessite une opération de contrôle avant l'introduction de la vis pour s'assurer que l'écrou n'a pas été monté dans une position trop excentrée par rapport au trou d'introduction de la vis formé dans la pièce, ni qu'il a été collé à l'intérieur de la cage lors de l'opération de traitement contre la corrosion ou de l'opération de peinture finale. Ce type de dispositif nécessite généralement l'utilisation d'une vis auto-nettoyante dans le cas où des éléments polluants se sont déposés sur le filet interne de l'écrou avant le montage de la vis.

Une autre solution consiste, dans le cas où la pièce est un corps creux tel qu'une traverse à section en U, à former une ouverture latérale dans chacune des branches du U, au travers desquelles on introduit un écrou en forme de plaquette qui dépasse de part et d'autre des branches vers l'extérieur. Outre le fait qu'elle présente des inconvénients similaires à ceux d'un montage en cage, cette solution a de plus pour défaut de provoquer un affaiblissement de la pièce dû aux ouvertures qui y sont ménagées.

Le document FR-A-2.472.686 décrit et représente un dispositif d'implantation d'un écrou du type comprenant un clip d'implantation sur une face duquel est fixé l'écrou et dont l'autre face prend appui sur la face interne de la pièce et comportant au moins deux pattes opposées flexibles d'encliquetage du clip dans deux ouvertures correspondantes dans lesquelles elles sont reçues avec jeu pour permettre un positionnement transversal automatique de l'écrou par rapport à la pièce lors de la présentation de la vis d'assemblage.

Ce dispositif de montage impose de pratiquer dans la pièce des ouvertures pour l'introduction des pattes du clip qui, si elles ne sont pas obturées ultérieurement, risquent de provoquer une corrosion de l'intérieur de la pièce par pénétration d'humidité ainsi qu'une salissure éventuelle de l'écrou lors des opérations de traitement et/ou de peinture.

Afin de remédier aux inconvénients des dispositifs qui viennent d'être décrits, l'invention propose un dispositif de montage du type de celui représenté dans le document US-A-2 779 377 qui comporte un élément intermédiaire fixé sur la face interne de la pièce et dans lequel sont formées les ouvertures.

Selon l'invention, l'élément intermédiaire est une plaque pliée en forme de U dans les branches de laquelle sont formées les ouvertures opposées, et le clip d'implantation peut également être une pièce en forme de plaque prenant appui sur la face interne de l'élément intermédiaire et comportant deux pattes latérales repliées sensiblement à l'angle droit et dont les extrémités libres sont propres à buter axialement contre des bords en vis à vis des ouvertures.

L'élément intermédiaire en forme de plaque peut avantageusement être fixé sur la pièce par exemple par soudage, ou par collage de la partie centrale du U sur la face interne de la pièce.

Le clip d'implantation peut comporter deux paires de pattes opposées flexibles qui coopèrent avec deux paires d'ouvertures formées chacune dans une branche de l'élément intermédiaire dans lesquelles elles pénètrent avec jeu.

D'autres caractéristiques et avantages de l'invention apparaîtront à la lecture de la description détaillée qui va suivre pour la compréhension de laquelle on se reportera aux dessins annexés dans lesquels :

– La figure 1 est une vue en coupe axiale du dispositif de montage selon l'invention implanté dans une pièce en forme de corps creux ;

– la figure 2 est une vue similaire à celle de la figure 1 illustrant la mise en place du clip à l'intérieur de l'élément intermédiaire ;

– la figure 3 est une vue en perspective éclatée du clip d'implantation et de son élément intermédiaire correspondant ; et

– la figure 4 est une vue, similaire à celle de la figure 1 représentant l'étape de démontage du clip d'implantation.

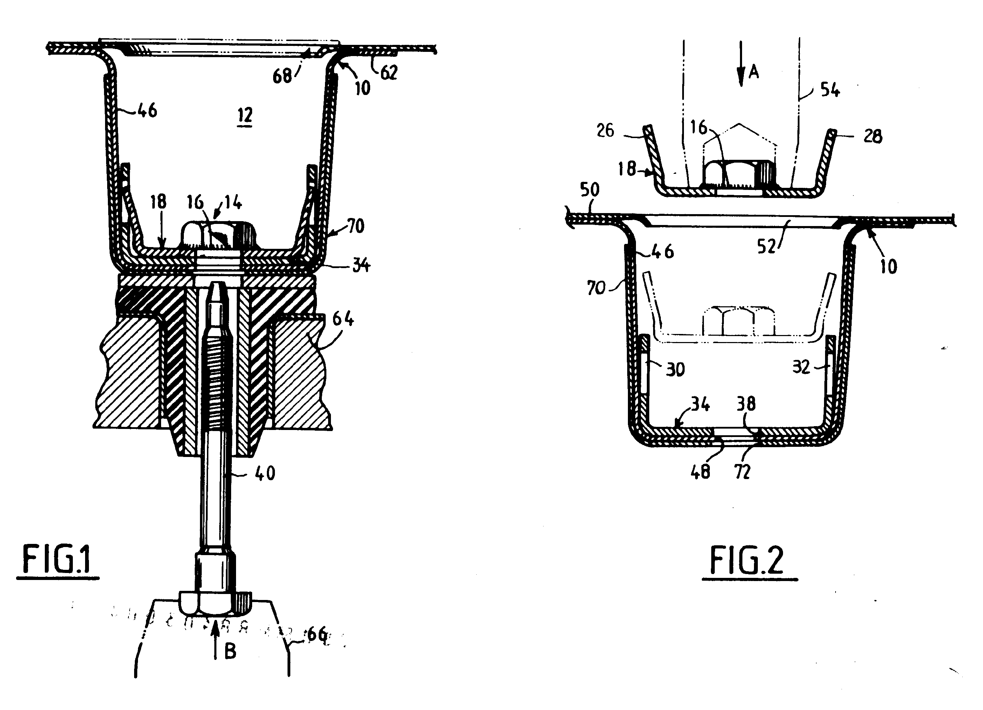

On a représenté à la figure 1 une pièce en tôle en forme de cornière 10 dans l'espace intérieur 12 de laquelle on désire monter un écrou 14. L'écrou 14 est un écrou hexagonal dont une face transversale 16 est fixée, par exemple par soudage, sur un clip d'implantation 18.

Le clip 18 est, dans le mode de réalisation représenté, une plaque en tôle comportant une partie rectangulaire plane 20, sur la face supérieure 21 de laquelle est soudé l'écrou 14, et deux bords repliés sensiblement à 90° 22 et 24. Chacun des bords repliés comporte une paire de pattes flexibles d'encliquetage 26 et 28 respectivement.

Les paires de pattes opposées deux à deux 26 et 28 sont prévues pour coopérer avec des paires d'ouvertures correspondantes, 30 et 32 respectivement, formées dans un élément intermédiaire de montage 34 conformément aux enseignements de la présente invention.

L'élément intermédiaire 34 est une plaque en tôle pliée en forme de U comportant une partie centrale plane 36 pourvue d'un perçage central 38 permettant le passage du corps d'une vis d'assemblage 40.

La partie plane centrale 36 se prolonge de part et d'autre par deux branches rabattues à 90° 42 et 44 dans chacune desquelles sont formées les paires d'ouvertures 30 et 32 respectivement.

L'élément intermédiaire 34 est fixé sur la face interne en vis à vis 46 du fond de la pièce 10, par exemple par soudage, et occupe à demeure sa position représentée à la figure 2 dans laquelle la perforation 38 est en regard d'un orifice correspondant 48 formé dans la pièce 10.

La mise en place du clip d'implantation 18, sur lequel a préalablement été fixé l'écrou 14, s'effectue, par son introduction axiale selon la direction indiquée par la flèche A de la Figure 2, à l'intérieur de la pièce en forme de corps creux 10.

Dans le cas où la pièce 10 est par exemple une traverse soudée sur la face inférieure du plancher 50 d'une caisse de véhicule automobile, non représenté, l'introduction du clip d'implantation 18 se fait par une ouverture 52 formée en vis à vis de la pièce 10 dans le plancher 50.

L'implantation du clip 18 se fait à l'aide d'un outil correspondant 54, représenté en silhouette à la figure 2, jusqu'à ce que, par déformation élastique, les pattes flexibles 26 et 28 pénètrent dans les ouvertures correspondantes 30 et 32 de l'élément intermédiaire 34. Dans cette position, représentée à la figure 1, la face inférieure 54 du clip d'implantation 18 est en appui plan sur la face supérieure 56 de la partie centrale 36 de l'élément intermédiaire 34 et les extrémités libres 58 de chacune des pattes flexibles 26 et 28 propres à buter axialement contre les bords supérieurs en vis à vis 60 des ouvertures 30 et 32 de manière à retenir axialement le clip d'implantation 18 par rapport à la pièce 10.

L'immobilisation du clip d'implantation 18 par rapport à la pièce 10 n'est qu'axiale car les pattes 26 et 28 sont dimensionnées de manière à être reçues avec jeu dans les ouvertures 30 et 32 de façon à ce que l'écrou et le clip 18 puissent se déplacer transversalement à l'intérieur de la pièce 10.

L'introduction de la vis d'assemblage 40, depuis la face externe 62 de la pièce 10, en vue de réaliser l'assemblage d'un élément 64 sur la pièce 10, peut être effectuée automatiquement à l'aide d'un robot d'assemblage et de vissage 66, représenté en silhouette à la figure 1.

Lors de son introduction axiale selon la flèche B de la figure 1, l'extrémité conique de la vis d'assemblage 40 provoque un positionnement automatique de l'écrou 14 coaxialement avec le corps de la vis.

L'ouverture 52 qui permet la mise en place du clip d'implantation 18 peut être obturée à l'aide d'un capuchon amovible 68.

Si on le souhaite, la pièce 10 peut être munie, sur sa face externe 62 d'une doublure de renfort 70 dans laquelle est prévu un orifice de passage 72 pour la vis d'assemblage 40.

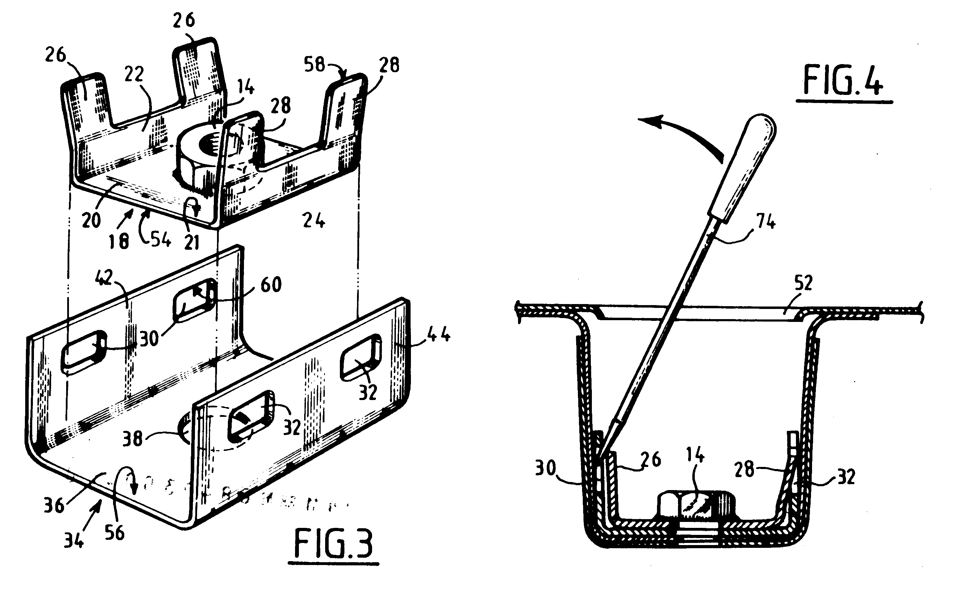

Le clip d'implantation 18 peut être démonté, comme cela est représenté à la figure 4, très simplement à l'aide d'un outil tel qu'un tournevis 74 qui permet de dégager élastiquement les pattes flexibles 26 et 28 des ouvertures correspondantes 30 et 32.

L'invention n'est bien entendu pas limitée au montage d'un écrou à l'intérieur d'un corps creux mais permet de réaliser le montage d'un écrou sur la face interne de n'importe quelle pièce, par exemple métallique, sur laquelle on désire fixer un élément au moyen d'une vis d'assemblage depuis la face externe de la pièce notamment selon un procédé d'automatisation qui nécessite que l'écrou se positionne de luimême, en aveugle, lors de l'introduction de la vis d'assemblage.

## Revendications

1. Dispositif de montage sur une face interne (46) d'une pièce (10) d'un écrou (14) destiné à recevoir une vis d'assemblage (40) introduite axialement depuis la face externe (62) de la pièce (10) du type comprenant un clip d'implantation (18) sur une face (21) duquel est fixé l'écrou (14) et dont l'autre face (54) prend appui sur la face interne (46) de la pièce (10) et comportant au moins deux pattes opposées et flexibles d'encliquetage (26, 28) du clip (18) dans deux ouvertures correspondantes (30, 32) et dans lesquelles elles sont reçues avec jeu pour permettre un positionnement transversal automatique de l'écrou (14) par rapport à la pièce (10) lors de la présentation de la vis d'assemblage (40), et du type comportant un élément intermédiaire (34) fixé sur la face interne (46) de la pièce (10) et dans lequel sont formées les ouvertures (30, 32), caractérisé en ce que l'élément intermédiaire (34) est une plaque pliée en forme de U dans les branches (42, 44) de laquelle sont formées les ouvertures opposées (30, 32), et en ce que le clip d'implantation (18) est une plaque (20) prenant appui sur la face interne (56) de l'élément intermédiaire (34) et comportant deux pattes latérales (26, 28) repliées sensiblement à angle droit, et dont les extrémités libres (58) sont propres à buter axialement contre des bords en vis à vis (60) des ouvertures (30, 32).

2. Dispositif de montage selon la revendication précédente, caractérisé en ce que le clip d'implantation (18) comporte deux paires de pattes opposées et flexibles (26, 28).

3. Dispositif de montage selon la revendication 2, caractérisé en ce que chaque branche (42, 44) de l'élément intermédiaire (34) comporte deux ouvertures (30, 32) dans chacune desquelles pénètre une patte flexible (26, 28).

## Patentansprüche

1. Vorrichtung zur Montage auf einer Innenfläche (46) eines Teils (10) einer Mutter (14), die dafür bestimmt ist, eine Zusammenbauschraube (40) aufzunehmen, die axial von der Außenfläche (62) des Teils (10) eingeführt wird und die von der Art ist, die eine Montageklammer (18) aufweist, auf deren einer Fläche (21) die Mutter (14) befestigt wird und deren andere Fläche (54) auf der Innenfläche (46) des Teils (10) aufliegt, und die mindestens zwei gegenüberliegende elastische Sperrhaken (26, 28) für das Einrasten der Klemme (18) in zwei entsprechende Öffnungen (30, 32) aufweist, in denen sie mit spiel aufgenommen werden, um eine automatische transversale Positionierung der Mutter (14) gegenür dem Teil (10) bei der Anbringung der Montageschraube (40) zu erlauben, und die von der Art ist, die ein Zwischenelement (34) aufweist, das auf der Innenfläche (46) des Teils (10) befestigt ist und in das Öffnungen (30, 32) eingebracht sind, **dadurch gekennzeichnet, daß** das Zwischenelement (34) ein U-förmig gebogenes Blech ist, in dessen Flanken (42, 44) gegenüberliegende Öffnungen (30, 32) eingebracht sind, und dadurch, daß die Montageklammer (18) ein Blech (20) ist, das auf der Innenfläche (56) des Zwischenelementes (34) aufliegt und das zwei seitliche Überwürfe (26, 28) aufweist, die weitgehend rechtwinklig abgebogen sind und deren freie Enden (58) so ausgebildet sind, daß sie axial an die Kanten von schraube zu schraube (69) der Öffnungen (30, 32) anstoßen.

2. Montagevorrichtung nach Anspruch 1, **dadurch gekennzeichnet, daß** die Montageklammer (18) zwei Paar gegenüberliegende elastische Überwürfe (26, 28) aufweist.

3. Montagevorrichtung nach Anspruch 2, **dadurch gekennzeichnet, daß** jede Flanke (42, 44) des Zwischenelementes (34) zwei öffnungen (30, 32) aufweist, in die jeweils ein elastischer Überwurf (26, 28) eingreift.

## Claims

1. Mounting device on the internal face (46) of a component (10) of a nut (14) intended to receive a machine bolt (40) introduced axially from the external face (62) of the component (10) of a type comprising an implantation clip (18) on one face (21) to which is fixed the nut (14) and the other face (54) of which presses on the internal face (46) of the component (10) and comprising at least two opposing and flexible locking tabs (26, 28) of the clip (18) in two corresponding openings (30, 32) and in which they are received with play so as to allow the automatic transversal positioning of the nut (14) relative to the component (10) when the machine bolt (40) is presented, and of a type containing an intermediate element (34) fixed on the internal face (46) of the component (10) and in which the openings (30, 32) are formed, characterized in that the intermediate element (34) is a plate (20) bent in the shape of a U in the arms (42, 44) of which are formed the opposing openings (30, 32) and in that the implantation clip (18) is a plate (20) pressing on the internal face (56) of the intermediate element (34) and comprising two lateral tabs (26, 28) bent back at approximately a right-angle, and of which the free ends (58) are convenient for abutting axially against the opposing edges (60) of the openings (30, 32).

2. Mounting device according to the preceding claim, characterized in that the implantation clip (18) has two pairs of opposing and flexible tabs (26, 28).

3. Mounting device according to claim 2, characterized in that each arm (42, 44) of the intermediate element (34) has two openings (30, 32) into each of which a flexible tab (26, 28) fits.

FIG.2

FIG.1

FIG.3

FIG.4

EP 0 322 267 B1